# EUROPEAN PATENT APPLICATION

(11) **EP 2 040 467 A1**
(43) Date of publication of application: **25.03.2009**
(21) Application number: 08164259.7
(22) Date of filing: 12.09.2008
(51) Int. Cl.: H04N 5/445

(54) **Method and system for providing program guide service**

(30) Priority: 20.09.2007 KR 20070096164
(71) Applicant: Alticast Corp., Seoul 137-858 (KR)
(72) Inventor: Lee, Ji-Young, songpa-gu 138-786, Seoul (KR)
(74) Representative: Michalski, Stefan

(57) **Abstract**

A method and a system for providing program guide service are disclosed. The method of providing program guide service in a broadcasting system coupled to at least one broadcasting terminal through a network includes generating a video source for program guide by processing a video signal for plural broadcasting programs, encoding the video source using predetermined algorithm, and transmitting the encoded video source to the broadcasting terminal. Here, the broadcasting terminal outputs the program guide having some of a plurality of sub-videos included the video source on the basis of audience rating.

## Description

### CROSS-REFERENCE TO RELATED APPLICATIONS

This application claims priority from Korean Patent Application No. 2007-96164 filed on September 20, 2007, the contents of which are incorporated herein by reference in its entirety.

### Technical Field

Example embodiment of the present invention relates to a method and a system for providing program guide service, more particularly relates to a method and a system for providing program guide service on the basis of user's preference information such as an audience rating.

### Related Art

In past, broadcasting service is provided through an analog method. However, digital broadcasting service has been actively studied according as users require high definition broadcasting, an interactive broadcasting and various additional services.

At present, a technique for standardization of the digital broadcasting has been developed with separated into European digital video broadcasting-multimedia home platform (Hereinafter, referred to as "DVB-MHP") and American advanced television systems committee-digital TV application software environment (Hereinafter, referred to as "ATSCDASE").

In recent, the standardization of the digital broadcasting has been actively studied, and thus a broadcasting signal having a video signal, an audio signal and a data signal is compressed to a digital signal. As a result, multi-channel may be applied in TV broadcasting. In addition, various programs may be provided in one channel due to increase of transmission rating.

Data broadcasting service for providing a broadcasting and data (additional information) related to the broadcasting has been provided according as a corresponding application is developed, the data broadcasting service having weather service, news service, stock service, email service, electric program guide EPG service, TV shopping service, banking service, call service and Internet search service.

Since the above data compression is performed, the data broadcasting may be provided and picture quality may be improved. However, a problem exists in that channel changing velocity of the digital broadcasting becomes slower than that of the analog broadcasting due to a time for download of broadcasting program of a channel selected by a user or a loading time of an application for the data broadcasting, etc.

Generally, in case that user's interest about present channel becomes low, the user would select broadcasting of another channel using a channel up/down key. However, since many channels exist and the channel changing velocity is slow in the digital broadcasting, most of digital broadcasting systems provide an electric program guide (Hereinafter, referred to as "EPG") for rapid channel search service.

The digital broadcasting system receives a video signal concerning a program broadcasted presently through a given EPG generating section, processes the video signal (converts the video signal to have small size), and provides the EPG in accordance with the processed result so that the user verifies easily video name and channel name concerning the program broadcasted presently and program information, etc.

The EPG is provided with mosaic type, and one EPG is usually made up of about twelve or sixteen sub-videos. Here, since one EPG has only preset number of sub-videos, the EPG is differently generated in accordance with broadcasting medium such as terrestrial broadcasting, satellite broadcasting, cable broadcasting. EPGs are respectively transmitted to the broadcasting terminal through corresponding channels.

In case that the EPG for the terrestrial broadcasting is provided, arrangement of broadcasting program may be changed. In this case, EPGs for the broadcasting programs should be generated, respectively.

Accordingly, in conventional technique, loss of bandwidth is occurred according as number of the channels provided to the user is increased. In addition, loss of bandwidth is occurred because many transmission channels are required so as to provide the EPSs, arranged with various methods, for the same broadcasting program.

In case that information concerning every broadcasting program is provided to the user under the condition that many broadcasting programs corresponding to channels exist, it is difficult for the user to select desired channel.

Accordingly, in case that many broadcasting programs exist, information concerning a broadcasting program preferred by the user should be provided to the user.

### Disclosure

### Technical Problem

Accordingly, the present invention is provided to substantially obviate one or more problems due to limitations and disadvantages of the related art.

Example embodiment of the present invention provides a method and a system for providing program guide service in which a user selects easily desired channel.

Another example embodiment of the present invention provides a method and a system for providing a program guide on the basis of user's view act.

Still another example embodiment of the present invention provides a method and a system for providing program guide service without increasing load of a headend terminal.

### Technical Solution

A method of providing program guide service in a broadcasting system coupled to at least one broadcasting terminal through a network according to one example embodiment of the present invention includes generating a video source for program guide by processing a video signal for plural broadcasting programs; encoding the video source using predetermined algorithm; and transmitting the encoded video source to the broadcasting terminal. Here, the broadcasting terminal outputs the program guide having some of a plurality of sub-videos included in the video source on the basis of audience rating.

A system for providing broadcasting service to at least one broadcasting terminal through a network includes a video source generating section for program guide configured to generate a video source for the program guide by processing a video signal for plural broadcasting programs; a video source encoding section configured to encode the video source using preset algorithm; an audience rating processing section configured to calculate audience rating ranking through view information of a user transmitted from the broadcasting terminal; and an audience rating ranking encoding section configured to encode information concerning the calculated audience rating ranking. Here, the broadcasting terminal outputs the program guide having some of plural sub-videos included in the video source on the basis of the information concerning the audience rating ranking.

A method of providing program guide in a broadcasting terminal which receives a broadcasting program from a broadcasting system through a network and plays the broadcasting program according to one example embodiment of the present invention includes receiving a video source for the program guide and information concerning audience rating ranking, wherein the video source has a plurality of sub-videos for plural broadcasting programs and is encoded in accordance with preset algorithm; editing sub-videos included in the video source by using the information concerning the audience rating ranking; and generating the program guide having some of the edited sub-videos.

### Advantageous Effects

A method of providing a personalized advertisement of the present invention sets properly parameters and points of control data matched with advertisements, and so the personalized advertisement may be provided to a user.

A method and a system for providing program guide service of the present invention may provide the program guide, thereby enhancing channel search efficiency.

In a method and a system for providing program guide service of the present invention, load of a headend terminal may not be increased when the program guide service is provided.

In addition, a method and a system for providing program guide service of the present invention may various program guides in accordance with preference of the user.

### Brief Description of Drawings

Example embodiments of the present invention will become more apparent by describing in detail example embodiments of the present invention with reference to the accompanying drawings, in which:

FIG. 1 is a block diagram illustrating a broadcasting system according to one example embodiment of the present invention;

FIG. 2 is a block diagram illustrating a digital data broadcasting system according to one example embodiment of the present invention;

FIG. 3 is a block diagram illustrating a broadcasting terminal according to one example embodiment of the present invention;

FIG. 4 is a view illustrating a video source for program guide according to one example embodiment of the present invention;

FIG. 5 is a view illustrating a program guide according to one example embodiment of the present invention;

FIG. 6 is a view illustrating a program guide according to another example embodiment of the present invention;

FIG. 7 is a view illustrating a program guide according to still another example embodiment of the present invention;

FIG. 8 is a flowchart illustrating a process of providing program guide service according to one example embodiment of the present invention;

FIG. 9 and FIG. 10 are views illustrating a program guide according to still another example embodiment of the present invention.

### Best Mode for Carrying Out the Invention

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between", "adjacent" versus "directly adjacent", etc.).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

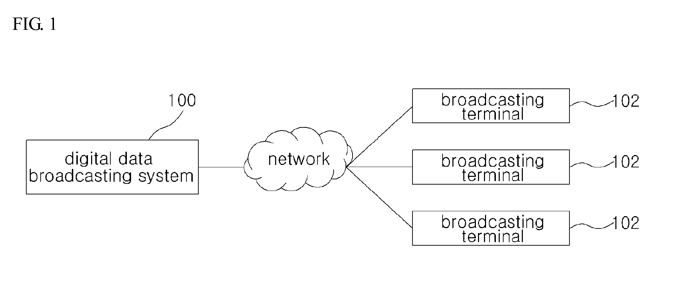

FIG. 1 is a block diagram illustrating a broadcasting system according to one example embodiment of the present invention.

In FIG. 1, the broadcasting system 100 of the present embodiment is coupled to at least one broadcasting terminal 102 through a network. Here, the network includes a wire network having an Internet and an exclusive line, and a wireless network having a wireless Internet, a mobile communication network, a broadcasting network and a satellite communication network. Hereinafter, the network is assumed as the broadcasting network in that a broadcasting signal is provided through the network.

The broadcasting system 100 converts a video signal and an audio signal for broadcasting program of various channels into proper format, and then transmits the converted signal to the broadcasting terminal 102.

In addition, the broadcasting system 100 performs a scheduling function about the broadcasting program and a scrambling function for blocking access of other people except a subscriber.

Furthermore, the broadcasting system 100 may include extra communication server, e.g. return path server for the purpose of processing requirement of a user through an uplink channel, and then provide Internet service and various communication service using the communication server.

The broadcasting system 100 provides a high definition broadcasting program compressed to digital. Hereinafter, the broadcasting system 100 is assumed as a digital data broadcasting system in that data service is provided through an application.

The digital data broadcasting system 100 may further provide data broadcasting application for use of various additional services and interactive service as well as the video signal/audio signal for a specific channel. Here, the data broadcasting application is formed by combining application for execution of a program with data corresponding to contents, e.g. is formed by combining the data received from news system, shopping system, stock system with the application.

The broadcasting terminal 102 performs tuning about a broadcasting signal transmitted from the digital data broadcasting system 100, and displays an image corresponding to the tuned broadcasting signal. Here, the broadcasting terminal 102 may be a set-top box coupled to a TV and for performing decoding of the broadcasting signal and the application, but is not limited as the set-top box. The broadcasting terminal 102 is not limited as specific terminal as long as the broadcasting terminal 102 provides a program guide on the basis of audience rating as described below.

The broadcasting terminal 102 processes the broadcasting program (video signal, audio signal and data signal) corresponding to a channel selected by the user of the tuned broadcasting signal, and then provides the processed broadcasting program to the user.

An operating system is set in the broadcasting terminal 102 so as to execute the application. Here, the operating system executes the application in case that the broadcasting signal has the data broadcasting application, thereby providing the data combined with the application to the user.

The application outputs an interface for request of a certain service by the user through a given display section, parses the data combined therewith in accordance with the request of the user, and outputs contents having the data such as text and graphic.

As described above, in case that the broadcasting terminal 102 provides the video signal converted into digital format and receives the data broadcasting application for additional service, much broadcasting standby time is required for selecting specific channel. Accordingly, the broadcasting terminal 102 provides a program guide so that the user may select easily a channel. As a result, the user verifies easily information concerning plural channels.

In one example embodiment of the present invention, the broadcasting terminal 102 monitors user's view act, and provides the program guide on the basis of the monitored result.

Particularly, the digital data broadcasting system 100 transmits video source for the program guide and audience rating ranking information to the broadcasting terminal 102. Here, the video source has a sub-video generated by processing video signals for broadcasting programs. The sub-video means a video signal with small size generated by converting size, etc of the video signal for the broadcasting programs transmitted from each of broadcasting stations, and is shown on a given area of the program guide outputted from the broadcasting terminal 102.

In addition, the sub-video may have a moving picture broadcasted in a corresponding channel. However, the sub-video is not limited as the moving picture, i.e. may have a still image of a corresponding channel.

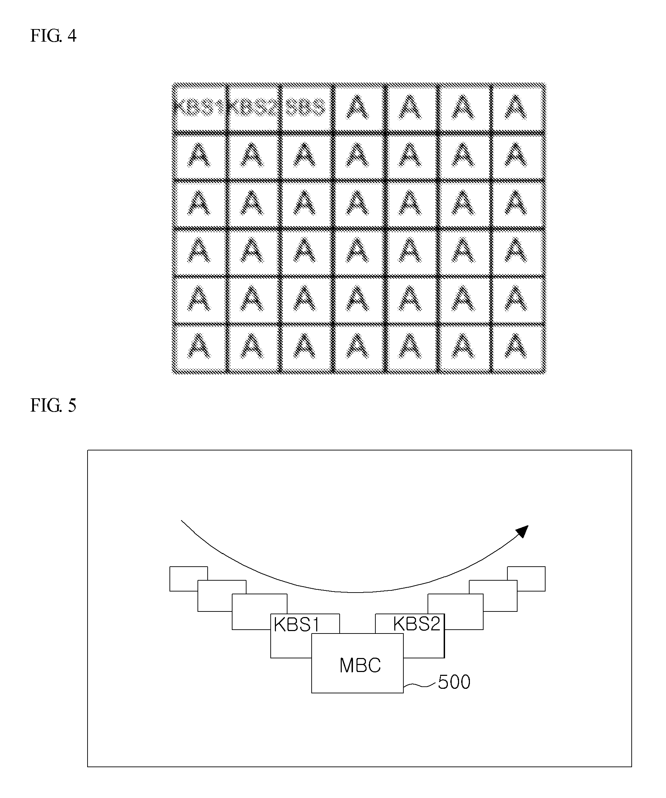

It is desirable that the video source has a sub-video for every broadcasting program to be provided to the broadcasting terminal 102 as shown in FIG. 4.

In one example embodiment of the present invention, the digital data broadcasting system 100 uses an encoding method in accordance with H.264 standard having high compression efficiency so as to encode the video source for the program guide. As a result, the video source having many sub-videos may be generated. Here, the H.264 is a recent moving picture compression standard manufactured in order to transmit a moving picture with a bandwidth smaller than HD TV, and is referred to as MPEG-4 part 10: advanced video coding AVC. The H.264 ensures video compressibility enhanced by about 50% compared to conventional MPEG4 in view of bit rates.

In conventional technique, a broadcasting system transmits a mosaic EPG having a limited number of sub-video through a tool such as a mosaic screen generator. In addition, the broadcasting system should generate respectively mosaic EPGs in case that sub-videos in the mosaic EPGs are differently arranged.

However, the digital data broadcasting system 100 of the present embodiment generates and encodes the video source having the sub-videos for every broadcasting program not limited number of sub-video by using improved compression technique, and then provides the encoded video source through one channel. Hence, loss of the bandwidth may be reduced when the digital data broadcasting system 100 transmits information for the program guide.

In one example embodiment of the present invention, an application for generation of the program guide is set in the broadcasting terminal 102. Here, the application generates the program guide by editing the video source for the program guide in accordance with ranking of audience rating, and then provides the generated program guide to the user.

In above description, the video source has many sub-videos. However, it is inefficient to show every sub-video through the program guide.

Accordingly, the broadcasting terminal 102 of the present embodiment performs a editing process of extracting a part of the sub-videos included in the video source through the EPG application, and provides the program guide having the edited sub-video. Here, the program guide may have constitution shown in FIG. 5 to FIG. 7.

As shown in FIG. 5, the program guide of the present embodiment may have band shape. Additionally, a sub-video having high audience rating ranking of a plurality of broadcasting programs may be preferentially outputted.

In the program guide shown in FIG. 5, the sub-video having high audience rating at initial may be outputted on a center area 500 of a screen. In case that the user wants to shift the sub-video through an input apparatus such as a remote controller, the broadcasting terminal 102 outputs in sequence enlarged sub-videos having next audience rating ranking on the center area 500 in an arrow direction.

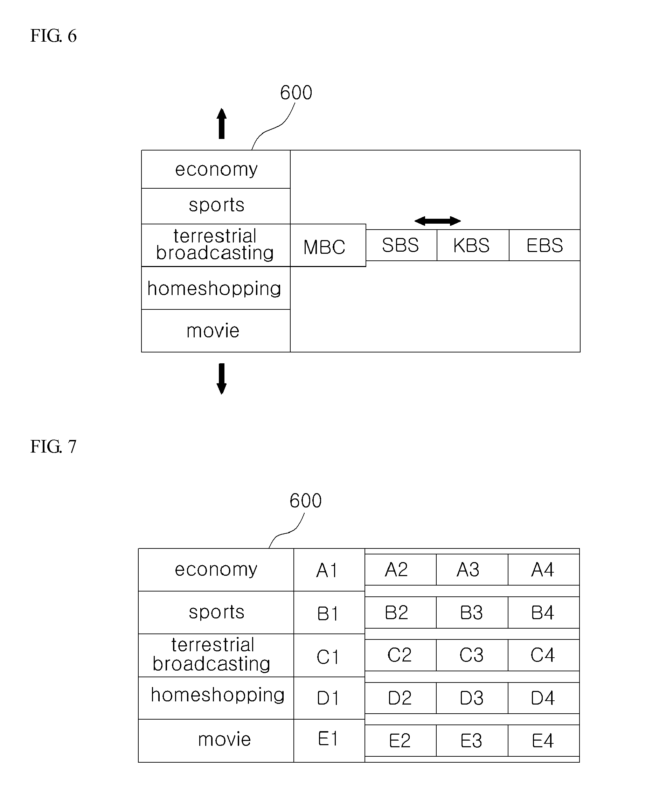

On the other hand, the broadcasting terminal 102 of the present embodiment may output a program guide having a sub-video corresponding to preset genre as shown in FIG. 6 and FIG. 7. Here, the broadcasting terminal 102 may output the program guide in which the sub-video of the broadcasting program having high audience rating raking is enlarger than the sub-video corresponding to the other genre or the other sub-videos of the broadcasting programs included in the same genre as shown in FIG. 6. In another example embodiment of the present invention, the broadcasting terminal 102 outputs the program guide in which the sub-videos having high audience rating raking of the sub-videos corresponding to whole genre are outputted on a given area as shown in FIG. 7. This constitution of the program guide is not limited.

In the program guide shown in FIG. 6 and FIG. 7, in case that other genre except the genres shown in FIG. 6 and FIG. 7 exists, a genre interface 600 may shift in an up direction or a down direction. In this case, the sub-videos may be shifted in a right direction or a left direction.

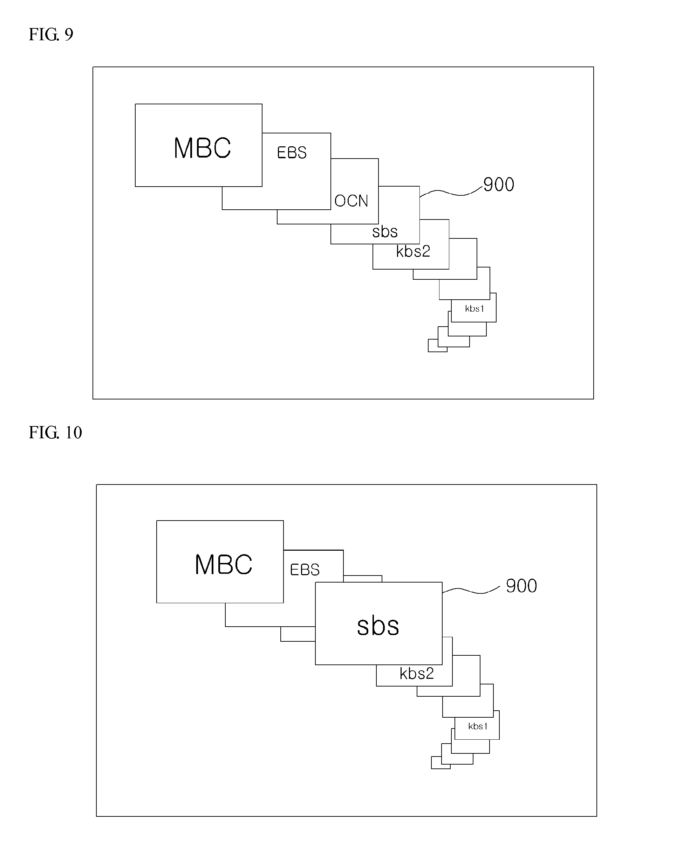

In another example embodiment of the present invention, the broadcasting terminal 102 may output a program guide in which size of sub-videos differs in accordance with audience rating ranking. For example, as shown in FIG. 9, in the program guide, the sub-video of a broadcasting program having highest audience rating is shown with highest size on top left, and the other sub-videos are disposed in sequence in accordance with the audience rating ranking. Here, size of the sub-video having high audience rating ranking is greater than that of the sub-video having low audience rating ranking. Accordingly, the user may verify intuitively the broadcasting program having high audience rating at present.

In one example embodiment of the present invention, in case that the user searches a channel under the condition that size of the sub-videos differs in accordance with the audience rating ranking, the broadcasting terminal 102 may output enlargedly a sub-video 900 selected by the user as shown in FIG. 10.

On the other hand, the information concerning the audience rating ranking may be periodically updated

To perform the above updating, the broadcasting terminal 102 monitors channel information selected by the user, and transmits the monitored information to the digital data broadcasting system 100. Here, the broadcasting terminal 102 may transmit an identifier, for identifying the broadcasting terminal 102, with the channel information.

It is desirable to apply a corresponding channel information to the audience rating ranking in case that the user views really the channel for a given time not transient viewing. In this case, the broadcasting terminal 102 discriminates whether or not a time viewed by the user after the user selects the channel is more than a predetermined time, and then transmits information concerning the viewed channel, i.e. channel information and a corresponding identifier to the digital data broadcasting system 100 in case that the viewed time is more than the predetermined time.

The digital data broadcasting system 100 receives the channel information and the identifiers from the broadcasting terminals 102, and calculates in real time or in a preset period of time the audience rating ranking about the broadcasting programs.

The digital data broadcasting system 100 transmits information concerning the calculated audience rating ranking to the broadcasting terminal 102.

The broadcasting terminal 102 provides optimized program guide to the user by using the video source for the program guide and the transmitted information concerning the calculated audience rating ranking.

In one example embodiment of the present invention, the digital data broadcasting system 100 transmits one-stop only information concerning the sub-video for the broadcasting programs and the information concerning audience rating ranking to the broadcasting terminal 102, and the broadcasting terminal 102 generates really the program guide. Accordingly, load of the digital data broadcasting system 100 may be reduced.

In addition, since the broadcasting terminal 102 stores many sub-videos and generates dynamically the program guide in real time or in the preset period of time in accordance with the audience rating ranking, a time for generating the program guide may be reduced.

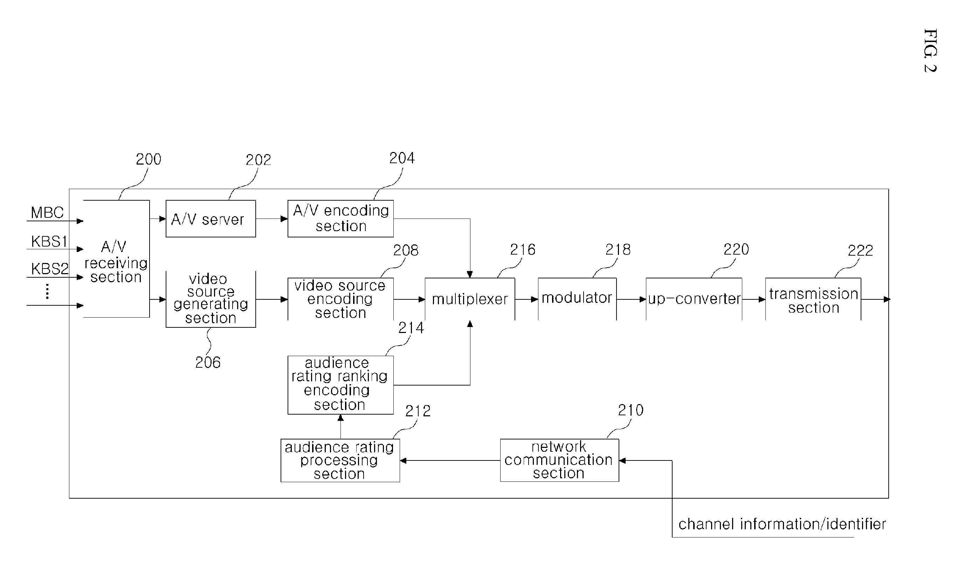

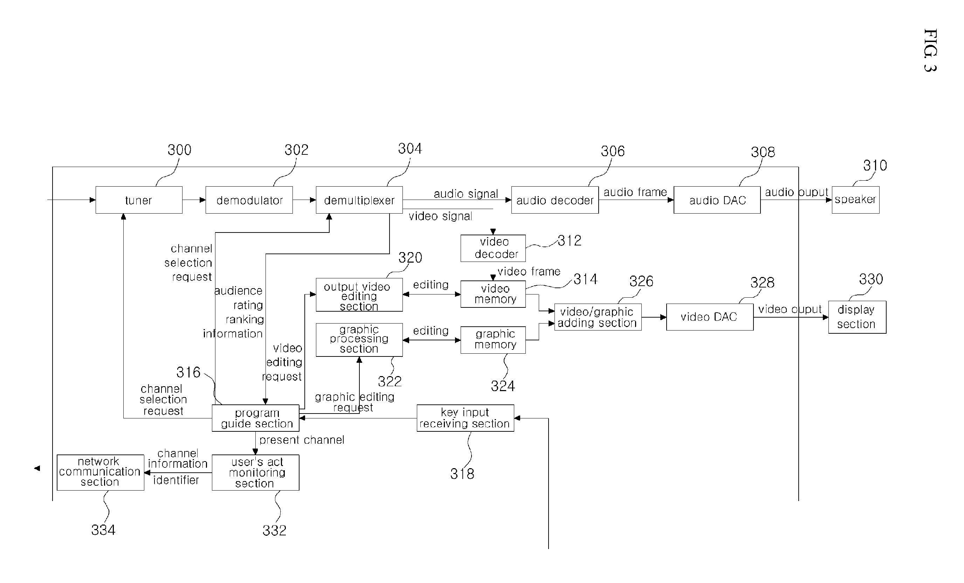

Hereinafter, a process of providing the program guide will be described in detail with reference to accompanying drawings FIG. 2 and FIG. 3.

FIG. 2 is a block diagram illustrating a digital data broadcasting system according to one example embodiment of the present invention.

In FIG. 2, an audio/video A/V receiving section 200 receives a broadcasting signal having an audio signal and a video signal provided from external broadcasting provider or a terrestrial broadcasting station.

An A/V server 202 collects and manages the transmitted broadcasting signal, and outputs the broadcasting signal to an A/V encoding section 204.

An A/V encoding section 204 converts the received audio signal and the video signal into predetermined data format. In one example embodiment of the present invention, the A/V encoding section 204 may convert the audio signal and the video signal into a moving picture experts group2-transport stream MPEG2-TS format corresponding to standard of the data broadcasting.

The video signal of the broadcasting signal received to the A/V receiving section 200 is also provided to a video source generating section 206 for the program guide.

The video source generating section 206 generates a plurality of sub-videos for the broadcasting program to be provided by processing the provided video signal. Here, the sub-video is a signal generated by converting size of the video signal to small size so that the sub-video is shown on the program guide.

In one example embodiment of the present invention, the video source generating section 206 generates sub-videos for every broadcasting program, and then transmits the generated video source, i.e. sub-videos to a video source encoding section 208.

The video source encoding section 208 encodes the video source of the program guide in accordance with preset algorithm. It is desirable to encode the sub-videos by using an algorithm in accordance with H.264 compression standard.

The video source encoding section 208 may be embodied as a high definition HD chip set. As a result, the video source encoding section 208 encodes the video source to have high compression efficiency with maintaining high definition.

On the other hand, the digital data broadcasting system 100 provides the information concerning audience rating ranking to the broadcasting terminal 102 so that the broadcasting terminal 102 edites the video source for the program guide having many sub-videos.

The network communication section 210 is coupled to the broadcasting terminal 102 through extra return path not a broadcasting network, and receives view information of the user from each of the broadcasting terminals 102. Here, the network communication section 210 may receive the view information concerning the channel selected by the user at present and the identifier of the broadcasting terminal 102.

An audience rating processing section 212 processes statistically the view information received from the broadcasting terminals 102, thereby calculating audience rating ranking. Here, the audience rating processing section 212 may calculate audience rating ranking about preset genre as well as whole audience rating ranking.

The audience rating processing section 212 may receive individual information of the user, e.g. age, area, sex, etc. from the broadcasting terminal 102, and calculate respectively the audience rating ranking in accordance with the age, the area and the sex. Here, the individual information of the user is pre-stored in extra database, and the audience rating processing section 212 may calculate the audience rating ranking in accordance with the pre-stored individual information.

An audience rating ranking encoding section 214 encodes information concerning the calculated audience rating ranking.

A multiplexer 216 makes the signals provided from the A/V encoding section 204, the video source encoding section 208 and the audience rating ranking encoding section 214 into one broadcasting signal to be broadcasted.

A modulator 218 modulates the broadcasting signal in accordance with standard of a broadcasting medium, e.g. terrestrial broadcasting, satellite broadcasting, cable broadcasting.

An up-converter 220 up-converts the modulated broadcasting signal to have a frequency to be transmitted.

A transmission section 222 outputs the up-converted broadcasting signal through the broadcasting medium.

FIG. 3 is a block diagram illustrating a broadcasting terminal according to one example embodiment of the present invention.

As described above, the broadcasting terminal 102 may be a set-top box, coupled to the TV, for providing digital data broadcasting service.

In FIG. 3, a tuner 300 outputs selectively a broadcasting signal of a corresponding channel of the received broadcasting signals with synchronizing with a given frequency.

A demodulator 302 demodulates the broadcasting signal outputted from the tuner 300. Here, the demodulated broadcasting signal has an audio signal, a video signal and data signal, and the demodulator 304 extracts the audio signal, the video signal and the data signal from the demodulated broadcasting signal, and outputs the extracted signals. This may be performed through demuxing and section filtering.

The audio signal outputted from the demultiplexer 304 is decoded by an audio decoder 306. The decoded audio signal is converted into an analog signal through an audio digital analog converter DAC 308, and then the converted audio signal is outputted from a speaker 310.

The video signal outputted from the demultiplexer 304 is outputted as video frame not compressed by decoded by a video decoder 312. The video frame is temporarily stored in a video memory 314.

The video memory 314 stores temporarily a still image of the video frame.

A program guide section 316 receives information concerning present channel selected by the user from a key input receiving section 318.

The program guide section 316 controls the tuner 300 and the demultiplexer 304 in accordance with the information concerning present channel so that the tuner 300 and the demultiplexer 304 receive/extract the broadcasting signal for a corresponding channel.

The program guide section 316 receives the information concerning the audience rating ranking from the demultiplexer 304.

The program guide section 316 requests video editing and graphic editing to an output video editing section 320 and a graphic processing section 322 when the information concerning the audience rating ranking is received.

The output video editing section 320 performs an editing process such as a process of clipping desired area, a scaling process and a transiting process through the video frame stored temporarily in the video memory 314.

In one example embodiment of the present invention, the video signal outputted from the demultiplexer 304 has sub-video signals for plural broadcasting programs. The output vide editing section 320 performs a process of editing the sub-video included in the video source for the program guide in accordance with the information concerning the received audience rating ranking. Particularly, the output video editing section 320 may select only sub-video corresponding to predetermined audience rating ranking of the sub-videos of every broadcasting program.

The graphic processing section 322 extracts graphic corresponding to the program guide from a graphic memory 324, and edits the extracted graphic. Here, the graphic may have preset wall paper, etc. outputted with the program guide for selection of the channel.

A video/graphic adding section 326 adds a still image (in a unit of a frame), stored in the video memory 314, i.e. still image of the sub-video frame selected in accordance with the audience rating ranking, to the graphic provided from the graphic memory 324.

A video/graphic generated by the adding is transmitted to a video DAC 328.

The DAC 328 converts the digital video/graphic into an analog signal, and then outputs the converted video/graphic to a display section 330.

The user may verify the program guide shown in FIG. 4 to FIG. 6 through editing request in accordance with the audience rating ranking and the editing process of the video source in the video editing section 320.

As described above, the program guide has the sub-video having a given ranking of the sub-videos for every broadcasting program, and specially assists for the user to verify preferentially the sub-video having high audience rating ranking.

A user's act monitoring section 332 receives the present channel information of the user from the program guide section 316, and transmits the present channel information and the identifier of the broadcasting terminal 102 to the network communication section 334. Here, the user's act monitoring section 332 does not transmit simply present channel information inputted in real time to the network communication section 334, but transmit the present channel information to the network communication section 334 in case that the user views the channel during above a preset time.

The network communication section 334 transmits the present channel information and the identifier of the broadcasting terminal 102 in a unit of data packet to the digital data broadcasting system 100 through a certain network.

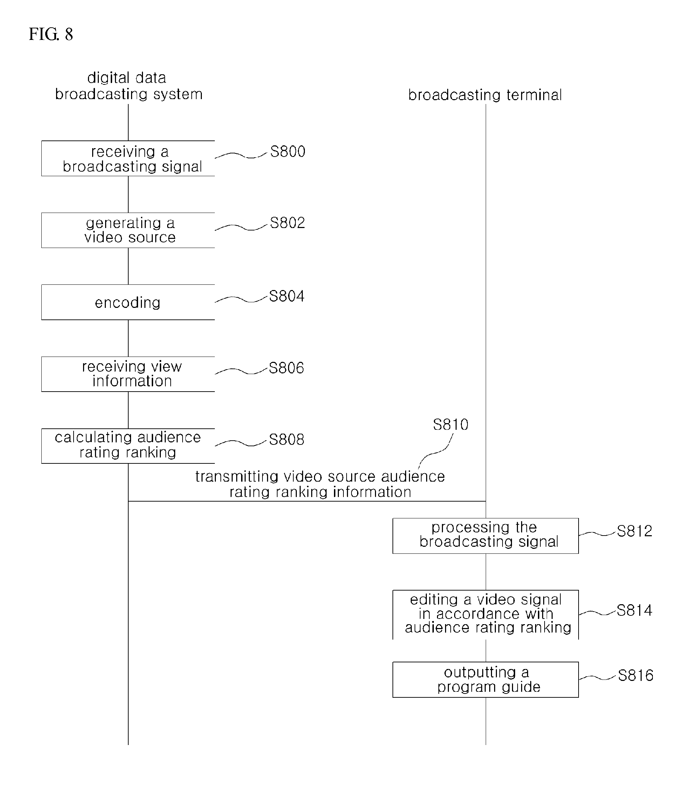

Hereinafter, a process of providing the program guide will be described in detail with reference to accompanying drawing FIG. 8.

In FIG. 8, in step of S800, the digital data broadcasting system 100 receives the broadcasting signal from the terrestrial broadcasting station or the program provider.

In step of S802, the digital data broadcasting system 100 generates the video source for the program guide by processing the video signal for the broadcasting program.

In step of S804, the digital data broadcasting system 100 encodes the video source in accordance with preset algorithm.

In step of S806, the digital data broadcasting system 100 receives the view information of the user from each of the broadcasting terminals 102. Here, the view information has the information concerning the present channel selected by the user and
the identifier of the broadcasting terminal 102 as described above.

In step of S808, the digital data broadcasting system 100 calculates the audience rating ranking through the view information.

In step of S810, the digital data broadcasting system 100 encodes the information concerning the calculated audience rating ranking and then transmits the information to the broadcasting terminal 102. Here, information concerning the video source and the information concerning the audience rating ranking are added as one broadcasting signal, and then the broadcasting signal is transmitted to the broadcasting terminal 102.

In step of S812, the broadcasting terminal 102 extracts the video source for the program guide and the information concerning the audience rating ranking from the broadcasting signal through the demodulating process and the demuxing process.

In step of S814, the broadcasting terminal 102 performs the video editing process in accordance with the information concerning the audience rating ranking.

In step of S816, the broadcasting terminal 102 outputs the program guide having only sub-video corresponding to given audience rating ranking of plural sub-videos included in the video source through the above video editing.

In one example embodiment of the present invention, since the digital data broadcasting system 100 provides the video source for the program guide having the sub-videos for every broadcasting program, extra processing process for the program guide may not be performed.

In addition, since the broadcasting terminal 102 provides optimized program guide in accordance with the received video source and the audience rating ranking, the user may select easily desired channel.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of providing program guide service in a broadcasting system coupled to at least one broadcasting terminal through a network, the method comprising:
generating a video source for program guide by processing a video signal for plural broadcasting programs;
encoding the video source using predetermined algorithm; and
transmitting the encoded video source to the broadcasting terminal,
wherein the broadcasting terminal outputs the program guide having some of a plurality of sub-videos included in the video source on the basis of audience rating.

2. The method of claim 1, wherein the video source has sub-videos for every broadcasting program to be provided.

3. The method of claim 1, wherein the step of encoding includes encoding the video source in accordance with H.264 compression standard, and the step of transmitting includes transmitting the encoded video source through one channel.

4. The method of claim 1, further comprising:
receiving view information of a user from at least one broadcasting terminal;
calculating audience rating ranking by using the received view information; and
transmitting information concerning the calculated audience rating ranking in a preset period of time to the broadcasting terminal.

5. The method of claim 4, wherein the view information has present channel information viewed by the user.

6. The method of claim 4, wherein the broadcasting terminal transmits the view information to the broadcasting system in case that a time of viewing a certain channel is more than a predetermined time.

7. The method of claim 1, wherein the broadcasting terminal outputs enlargedly a sub-video of the broadcasting program having high audience rating ranking.

8. The method of claim 7, wherein the audience rating ranking is divided in accordance with preset genres, and the broadcasting terminal outputs enlargedly the sub-video of the broadcasting program having high audience rating ranking in each of the genres.

9. The method of claim 7, wherein the broadcasting terminal outputs the sub-videos with size in accordance with the audience rating ranking.

10. The method of claim 9, wherein the broadcasting terminal outputs enlargedly a sub-video selected by the user among the sub-videos.

11. A system for providing broadcasting service to at least one broadcasting terminal through a network, the system comprising:
a video source generating section for program guide configured to generate a video source for the program guide by processing a video signal for plural broadcasting programs;
a video source encoding section configured to encode the video source using preset algorithm;
an audience rating processing section configured to calculate audience rating ranking through view information of a user transmitted from the broadcasting terminal; and
an audience rating ranking encoding section configured to encode information concerning the calculated audience rating ranking,
wherein the broadcasting terminal outputs the program guide having some of plural sub-videos included in the video source on the basis of the information concerning the audience rating ranking.

12. The system of claim 11, wherein the video source generating section generates the video source for every broadcasting program to be provided, and the video source encoding section encodes the video source to one file in accordance with H.264 compression standard.

13. A method of providing program guide in a broadcasting terminal which receives a broadcasting program from a broadcasting system through a network and plays the broadcasting program, the method comprising:
receiving a video source for the program guide and information concerning audience rating ranking, wherein the video source has a plurality of sub-videos for plural broadcasting programs and is encoded in accordance with preset algorithm;
editing plural sub-videos included in the video source by using the information concerning the audience rating ranking; and
generating the program guide having some of the edited sub-videos.

14. The method of claim 13, further comprising:
monitoring present channel information through key signal input of a user; and
transmitting the present channel information to the broadcasting system through the network.

15. The method of claim 14, wherein the step of monitoring includes discriminating whether or not a viewing time of a channel by the user is more than a given time.

16. The method of claim 13, wherein the video source has a video signal for every broadcasting program to be provided, the step of generating the program guide includes generating the program guide which has enlarged sub-video of a broadcasting program having high audience rating in accordance with a preset genre.

17. The method of claim 13, wherein the sub-videos are outputted with size in accordance with the audience rating ranking.

18. The method of claim 17, wherein a sub-video selected by the user of the sub-videos is enlargedly outputted.

19. The method of claim 13, wherein the video source has sub-videos for every broadcasting program to be provided.

20. The method of claim 13, wherein the video source is encoded in accordance with H.264 compression standard.
